# FASCICULE DE BREVET EUROPEEN

(11) **EP 0 522 939 B1**
(45) Date de publication et mention de la délivrance du brevet: **25.01.1995**
(21) Numéro de dépôt: 92401910.2
(22) Date de dépôt: 03.07.1992
(51) Int. Cl.: B60N 2/44

(54) **Vérin monogalet permettant le verrouillage de deux éléments articulés entre eux**
Geradlinige Winde mit einer Rolle zum Verriegeln zweier mit einander angelenkten Elemente
Linear actuator, having one roller, for locking two interconnected elements

(30) Priorité: 10.07.1991 FR 9108691
(43) Date de publication de la demande: 13.01.1993
(73) Titulaire: BERTRAND FAURE AUTOMOBILE "B.F.A.", F-91300 Massy (FR)
(72) Inventeur: Jaudouin,Paul, F-61100 St. Georges des Groseillers (FR); Droulon,Georges, F-61100 Flers (FR)
(74) Mandataire: Madeuf, René Louis

(56) Documents cités:
- EP-A- 0 234 160
- EP-A- 0 419 336
- FR-A- 2 547 078
- FR-A- 2 574 721

## Description

La présente invention a pour objet un vérin monogalet permettant le verrouillage de deux éléments articulés entre eux et son emploi est plus particulièrement destiné à être utilisé dans des sièges de véhicules divers, en particulier ceux qui comportent un dossier réglable en inclinaison et ceux qui comportent un réglage en hauteur de l'assise du siège.

Pratiquement tous les véhicules, actuellement en circulation, comportent, à l'avant, des sièges dont le dossier est réglable en inclinaison pour augmenter, d'une part, la sécurité du passager en assurant l'adaptation du siège à la morphologie de ce passager et permettre, d'autre part, dans les véhicules à deux portes, le rabattement du dossier sur l'assise pour permettre l'entrée et la sortie des passagers placés à l'arrière du véhicule et qui sont assis soit sur une banquette, soit sur des sièges.

On connaît depuis longtemps des mécanismes permettant ces différentes manoeuvres du dossier de siège avant, mais ces mécanismes sont, d'une part, assez compliqués et, d'autre part, assez fragiles.

Dans le but d'obtenir des éléments peu coûteux sans jeu et cependant ayant une très grande résistance, l'invention crée un vérin monogalet compact, d'une réalisation facile et d'une grande sécurité car le blocage du vérin permet de résister aux chocs pouvant se produire, aussi bien des chocs frontaux que des chocs latéraux, sans que le mécanisme de réglage considéré soit déverrouillé. Ainsi, on peut assurer une sécurité complète aux passagers assis sur le siège.

On connaît cependant par EP-A-0 419 336 et notamment sa figure 5, un vérin monogalet permettant un verrouillage de deux éléments articulés entre eux, comportant un boîtier creux affectant sensiblement une forme trapézoïdale, fixé sur l'armature d'un siège et dont la partie supérieure est traversée par une tige, un galet strié étant placé entre deux rampes dentées d'une pièce en V qui s'applique par l'un de ses côtés sur le bord intérieur du boitier et qui présente une pente inclinée sensiblement à 45° pour coopérer avec une came.

Conformément à l'invention, la pièce en V forme, à sa partie supérieure, une fourche à deux branches à l'intérieur desquelles se trouve le galet et cette pièce en V présente un évidement arrondi inférieur, la came comportant un méplat et un doigt servant à dégager le bord de la pièce en V lors de la rotation de la came dans le sens contraire aux aiguilles d'une montre contre l'action d'un ressort de rappel qui coopère avec l'axe supportant la came, mouvement dégageant ainsi le galet strié bloqué normalement sous la face inférieure de la tige.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est une élévation latérale du vérin monogalet conformément à l'invention.

La fig. 2 est une élévation latérale d'une partie du vérin monogalet montrant la position des pièces lorsque le vérin est verrouillé.

La fig. 3 est une coupe suivant la ligne III-III de la fig. 2.

La fig. 4 est une élévation latérale d'une partie du vérin monogalet montrant la position des pièces lorsque le vérin est déverrouillé.

La fig. 5 est une coupe suivant la ligne V-V de la fig. 4.

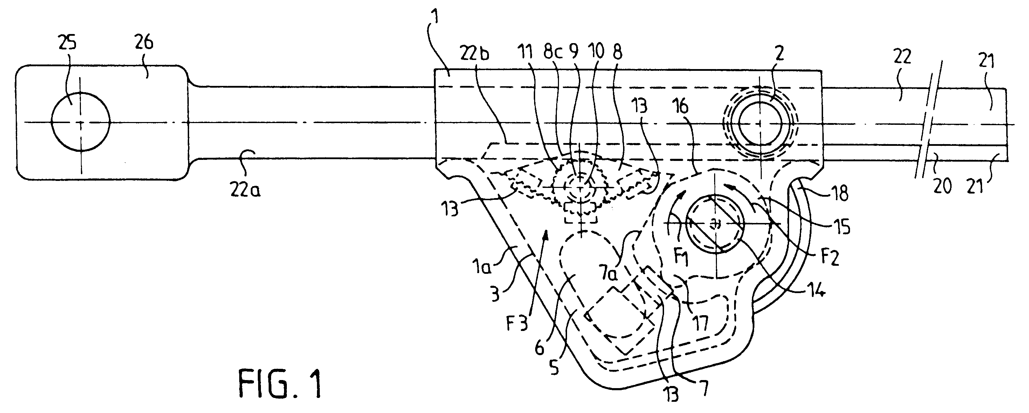

A la fig. 1, on a représenté latéralement un boîtier 1 de forme sensiblement trapézoïdale qui est fixé par l'intermédiaire d'une douille 2 par exemple au bâti fixe supportant l'assise d'un siège.

Ce boîtier 1 présente, à sa partie inférieure 1a, une pente intérieure 3 contre laquelle prend appui le côté gauche d'une pièce 5 affectant sensiblement la forme d'un V, cette pièce 5 présentant un embouti de compensation d'épaisseur 6.

De plus, la pièce 5 en V comporte, sur son côté droit, un évidement 7 arrondi à sa partie inférieure et incliné à sa partie supérieure 7a sensiblement suivant un angle de 45°.

Finalement, la pièce 5 en V se termine à sa partie supérieure par une fourche 8 dont les branches 8a et 8b comportent des dégagements 9 permettant la mise en place d'un axe 10 supportant un galet strié 11. Entre les deux branches 8a, 8b la pièce 5 en V présente deux rampes dentées coopérant avec le galet 11.

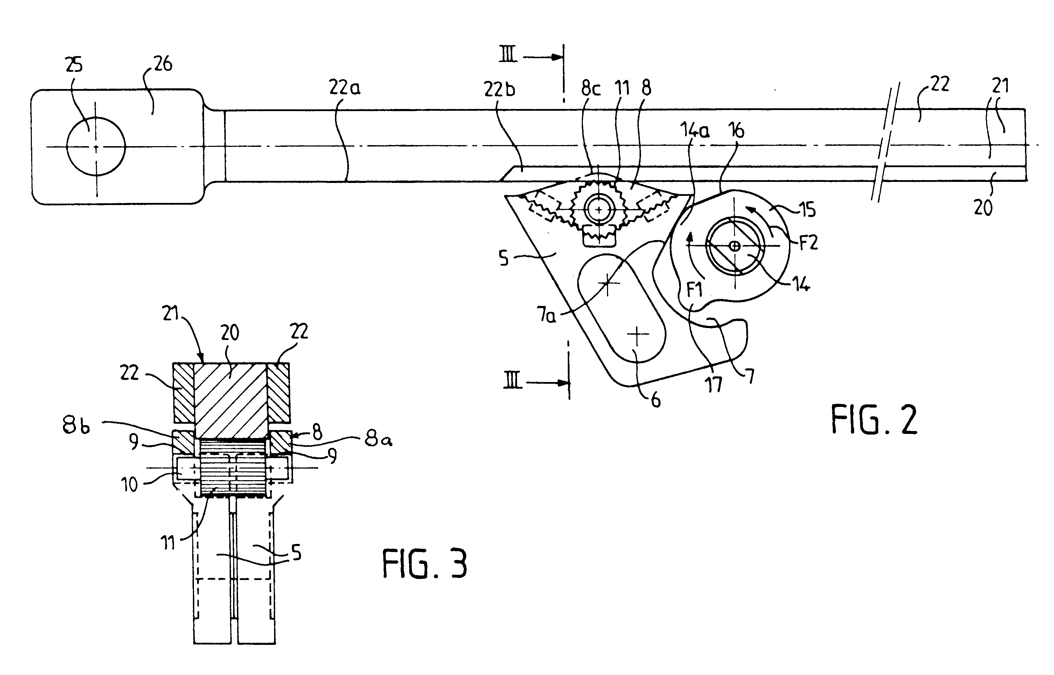

Comme on peut s'en rendre compte à la fig. 3, la pièce 5 est réalisée en deux parties symétriques fixées l'une à l'autre par tout moyen convenable.

Le boîtier 1 est également réalisé le plus souvent en deux pièces qui sont reliées l'une à l'autre par des bretelles 13. Ce boîtier est en une matière rigide par exemple en acier ou moulé en alliages. Pour augmenter la résistance des branches 8a, 8b, on a prévu trois pattes 13 semi-découpées.

Le boîtier supporte également un axe 14 monté dans sa partie droite et sur lequel est fixée une came 15 présentant un méplat 16 et un doigt 17, placé sensiblement à 45° de l'axe central du méplat 16.

Un ressort 18, dont on ne voit qu'une partie à la fig. 1, est accroché, par l'une de ses extrémités, sur le boîtier 1 et, par son autre extrémité, sur l'axe 14 de façon que la tension du ressort fasse que la came 15 s'applique fortement sur la pente intérieure 7a de la pièce 5 en V, en repoussant cette dernière vers le haut dans le sens de la flèche F₃ (fig. 1) et qu'ainsi le galet strié 11 vienne s'appliquer avec force sur la partie centrale 20 de la tige de vérin 21 qui présente latéralement deux guides 22 permettant le guidage de la partie centrale 20 de la tige 21 entre les deux branches 8a, 8b de la fourche 8 (voir fig. 3).

La fig. 2 montre la position de la came 15 lors du blocage du vérin monogalet sur la tige 21 puisque la partie excentrée 14a de la came 15 s'applique fortement contre la pente interne 7a de la pièce 5 en V sous l'action du ressort 18 ici non représenté.

Ainsi, dans cette position, la tige 21 est bloquée et l'organe, qui est relié par un trou 25 percé dans la partie aplatie gauche terminale 26 de la tige 21, est dans une position déterminée choisie à l'avance, par exemple l'inclinaison du dossier du siège recherchée par l'utilisateur.

A ce moment, la came 15 est soumise à une force dirigée dans le sens de la flèche F₁ (voir fig. 1 et 2).

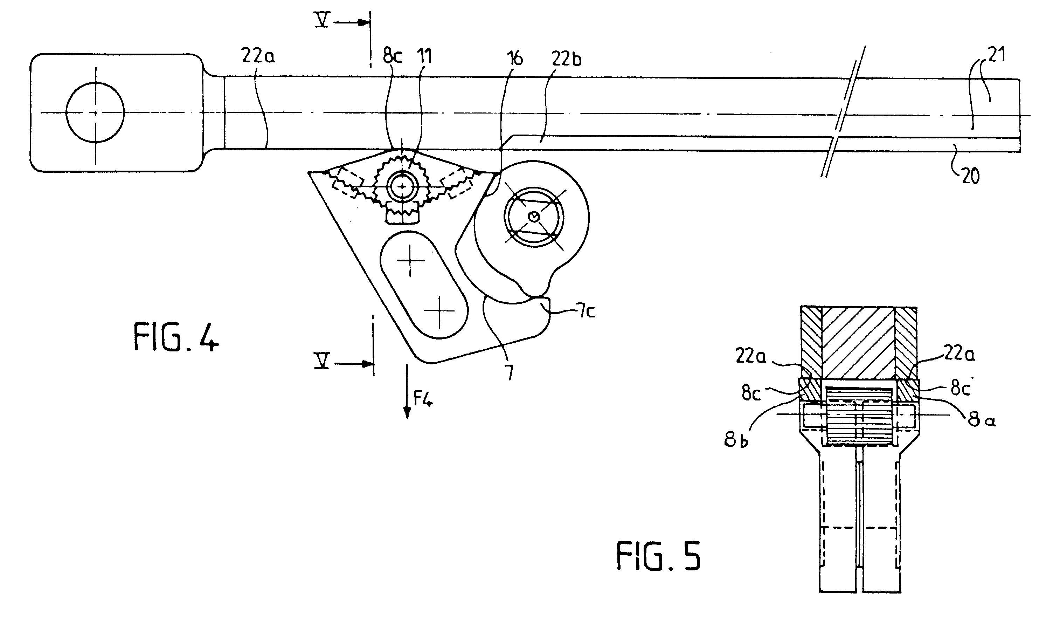

Lorsqu'on désire modifier la position de l'élément mobile par exemple l'inclinaison du dossier d'un siège, l'utilisateur déverrouille l'ensemble en faisant tourner, à l'aide d'un organe de manoeuvre non représenté, l'axe 14 dans le sens de la flèche F₂ (voir fig. 1 et 2), ce qui provoque la rotation de la came 15 et amène celle-ci dans la position représentée à la fig. 4.

Le méplat 16 vient se placer contre la pente interne 7a de la pièce 5 en V et le doigt 17 vient porter sur l'extrémité 7c en forme de nez de la pièce 5 en V, en repoussant celle-ci vers le bas dans le sens de la flèche F₄ (voir fig. 4).

A ce moment, le galet strié 11 est totalement dégagé de la partie centrale 20 de la tige de vérin 21 qui se trouve être libérée et l'on peut alors régler à volonté l'inclinaison du dossier.

Dès que l'utilisateur relâche l'organe de manoeuvre, le ressort 18 rappelle l'axe 14 et, donc, la came 15 dans la position de blocage représentée aux fig. 1 et 2 en faisant tourner la came 15 dans le sens de la flèche F₁ (fig. 1 et 2).

Le galet 11 entre de nouveau en contact avec la partie centrale 20 de la tige de vérin 21 en bloquant ainsi le mécanisme.

Dans le cas de choc frontal ou latéral, la masse du galet 11 provoque sa remontée sur l'une des rampes dentées de la pièce 5 en V en provoquant un blocage très important de ce galet 11 sous la tige 21, ce qui verrouille l'élément mobile du siège (dossier) par rapport à l'assise et augmente, de ce fait, la sécurité du passager assis sur ce siège, l'armature rigide du siège pouvant ainsi absorber l'augmentation soudaine des G (m/kg) provoquée par le choc.

A la fig. 3, il est représenté une position du vérin utilisé pendant le basculement du dossier vers l'avant permettant le passage des utilisateurs aux places arrière du véhicule (Easy-Entry).

Une certaine longueur 22a des deux guides 22 prend appui en 8c empêchant ainsi la rotation de la came 15. Lorsque les passagers sont assis aux places arrière et que l'on rabat le dossier vers l'arrière, les zones 8c glissent sur la partie 22a des deux guides 22 pour tomber dans le dégagement 22b. A cet instant, il est possible à la came 15, qui n'est plus retenue par le méplat 16 sur la face 7a, de tourner sous l'effet du ressort 18. L'ensemble des pièces 5 en V ainsi que le galet 11 se déplacent vers le haut, la partie striée du galet prend contact avec la tige 20.

Pour retrouver sa position de confort, l'utilisateur doit faire tourner la came 15 et faire débattre le dossier vers l'arrière.

L'étude ci-dessus a été faite en prévoyant l'articulation d'un dossier de siège par rapport à l'assise de ce dernier mais ce vérin peut être utilisé dans d'autres cas, par exemple un dispositif de réhausse de l'assise d'un siège.

## Revendications

1. Vérin monogalet permettant un verrouillage de deux éléments articulés entre eux, comportant un boîtier (1) creux affectant sensiblement une forme trapézoïdale, fixé sur l'armature d'un siège et dont la partie supérieure est traversée par une tige (21), un galet strié (11) étant placé entre deux rampes dentées d'une pièce (5) en V qui s'applique par l'un de ses côtés (3) sur le bord intérieur du boîtier (1) et qui présente une pente (7a) inclinée sensiblement à 45° pour coopérer avec une came (15), caractérisé en ce que la pièce (5) en V forme, à sa partie supérieure, une fourche à deux branches (8a, 8b) à l'intérieur desquelles se trouve le galet et en ce que cette pièce en V présente un évidement arrondi inférieur (7), la came (15) comportant un méplat (16) et un doigt (17) servant à dégager le bord de la pièce (5) en V lors de la rotation de la came (15) dans le sens contraire aux aiguilles d'une montre contre l'action d'un ressort de rappel (18) qui coopère avec l'axe (14) supportant la came (15), mouvement dégageant ainsi le galet strié (11) bloqué normalement sous la face inférieure de la tige (21).

2. Vérin suivant la revendication 1, caractérisé en ce que la tige comporte une partie centrale (20) et deux guides latéraux (22) de hauteur moindre pour permettre au galet d'être en contact avec la tige, en position normale alors que en position de basculement du dossier, une partie des guides latéraux (22a) vient en contact sur le sommet (8c) de la fourche (8) pour empêcher le blocage du galet strié (11) sur la tige.

3. Vérin suivant la revendication 2, caractérisé en ce qu'en cas de choc dans l'un des sens axiaux de la tige du vérin lors du déverrouillage ou de la position déverrouillée, le galet strié (11) projeté sur les branches (8a - 8b) vient coopérer avec la tige (20) et arrêter le coulissement de la tige.

4. Vérin suivant la revendication 1, caractérisé en ce que le doigt (17) de la came (15) agit sur l'extrémité (7c) en forme de nez de l'évidement (7) de cette pièce (5) en forme de V pour repousser vers le bas cette dernière et dégager ainsi le galet strié (11) de la partie centrale (20) de la tige de vérin (21).

5. Vérin suivant la revendication 1, caractérisé en ce que les pièces (5) sont réalisées par écrasage, la partie supérieure en forme de fourche (8) étant retenue principalement par des pattes (13).

6. Vérin suivant la revendication 1, caractérisé en ce que les boîtiers (1) sont symétriques et réalisés en matière rigide.

7. Vérin suivant l'une des revendications 1 et 2, caractérisé en ce que la tige (21) du vérin monogalet présente un plat (26) percé d'un trou (25) permettant la fixation de cette tige de vérin (21) sur la partie mobile du siège, par exemple, le dossier.

## Claims

1. A single-roller linear actuator enabling latching of two elements articulated together, comprising a hollow casing (1) having a substantially trapezoidal shape, secured onto the frame of a seat and the upper portion of which is crossed through by a rod (21), a fluted roller (11) being placed between two toothed ramps of a V-shaped member (5) which is applied by one of its sides (3) on the inner edge of the casing (1) and which has a slanted portion (7a) inclined substantially at 45° for cooperating with a cam (15), characterized in that the V-shaped member (5) has, at its upper part, a fork with two arms (8a, 8b) within which is provided the roller, and in that this V-shaped member has a lower rounded cut-out portion (7), the cam (15) having a flat portion (16) and a finger (17) used for releasing the edge of the V-shaped member (5) upon rotation of the cam (15) in the counter clockwise direction against the action of a return spring (18) which cooperates with the pin (14) that supports the cam (15), which movement thus disengages the fluted roller (11) locked normally underneath the lower face of the rod (21).

2. Linear actuator according to claim 1, characterized in that the rod comprises a central portion (20) and two lateral guides (22) of a smaller height for enabling the roller to contact the rod, in the normal position, whereas, in the rocking position of the seat back, a portion of the lateral guides (22a) comes into engagement with the top (8c) of the fork (8) for preventing the locking of the fluted roller on the rod.

3. Linear actuator according to claim 2, characterized in that, when there is an impact in one of the axial directions of the rod of the linear actuator, during unlocking or at the unlocked position, the fluted roller (11) that is thrown onto the arms (8a - 8b) cooperates with the rod (20) and stops the sliding of the rod.

4. Linear actuator according to claim 1, characterized in that the finger (17) of the cam (15) acts on the nose-shaped end (7c) of the cutout portion (7) of this V-shaped member (5) for pushing it back downwardly and thereby disengaging the fluted roller (11) from the central portion (20) of the linear actuator rod (21).

5. Linear actuator according to claim 1, characterized in that the members (5) are made by crushing, the fork-shaped upper portion (8) being maintained mainly by lugs (13).

6. Linear actuator according to claim 1, characterized in that the casings (1) are symmetrical and made of a rigid material.

7. Linear actuator according to one of claims 1 and 2, characterized in that the rod (21) of the single roller linear actuator is provided with a flat portion (26) pierced with a hole (25) enabling the fixation of this linear actuator rod (21) on the mobile portion of the seat, typically the seat back.

## Patentansprüche

1. Einzelrollen-Verstellvorrichtung zum Verriegeln von zwei gelenkig miteinander verbundenen Bauteilen, mit einem hohlen Gehäuse (1) von im wesentlichen trapezförmiger Gestalt, das am Gestell eines Sitzes befestigt ist und dessen oberer Abschnitt von einer Stange (21) durchdrungen ist, einer Riffelrolle (11), die zwischen zwei gezahnten Schrägflächen eines V-förmigen Bauteils (5) angeordnet ist, das mit einer seiner Seiten (3) am Innenrand des Gehäuses (1) anliegt und zum Zusammenwirken mit einer Nocke (15) eine um zumindest annähernd 45° geneigte Schrägfläche (7a) aufweist,
dadurch gekennzeichnet, daß
- das V-förmige Bauteil (5) an seinem oberen Abschnitt mit einer Gabel mit zwei Zinken (8a, 8b) ausgebildet ist, auf deren Innenseite sich die Rolle befindet, und
- dieses V-förmige Bauteil eine untere, gerundete Ausnehmung (7) aufweist, die Nocke (15) eine Anflächung (16) und einen Ansatz (17) aufweist, der dazu dient, den Rand des V-förmigen Bauteils (5) bei der Drehung der Nocke (15) entgegen dem Uhrzeigersinn gegen die Wirkung einer Rückstellfeder (18), die mit der die Nocke (15) tragenden Achse (14) zusammenwirkt, abzuheben, wobei durch diese Bewegung somit die normalerweise unter der Unterseite der Stange (21) blockierte Riffelrolle (11) freigegeben wird.

2. Verstellvorrichtung nach Anspruch 1,
dadurch gekennzeichnet, daß
die Stange ein Mittelstück (20) und zwei seitliche Führungen (22) geringerer Höhe aufweist, die in normaler Stellung das Anliegen der Rolle an der Stange ermöglichen, wogegen in Schwenkstellung der Rückenlehne ein Teil der seitlichen Führungen (22a) sich an den Scheitel (8c) der Gabel (8) anlegt, um das Blockieren der Riffelrolle (11) an der Stange zu verhindern.

3. Verstellvorrichtung nach Anspruch 2,
dadurch gekennzeichnet, daß
bei einem Stoß in einer der axialen Richtungen der Stange der Verstellvorrichtung beim Entriegeln oder in der entriegelten Stellung die auf die Zinken (8a, 8b) geschleuderte Riffelrolle (11) mit der Stange (20) zusammenwirkt und das Verschieben der Stange verhindert.

4. Verstellvorrichtung nach Anspruch 1,
dadurch gekennzeichnet, daß
der Ansatz (17) der Nocke (15) auf das nasenförmige Ende (7c) der Ausnehmung (7) dieses V-förmigen Bauteils (5) wirkt, um letzteres nach unten zu drängen und somit die Riffelrolle (11) vom Mittelstück (20) der Verstellvorrichtungsstange (21) abzuheben.

5. Verstellvorrichtung nach Anspruch 1,
dadurch gekennzeichnet, daß
die Bauteile (5) durch Stauchen hergestellt sind, wobei der obere Abschnitt in Form einer Gabel (8) hauptsächlich durch Pratzen (13) festgehalten ist.

6. Verstellvorrichtung nach Anspruch 1,
dadurch gekennzeichnet, daß
die Gehäuse (1) symmetrisch und aus starrem Werkstoff hergestellt sind.

7. Verstellvorrichtung nach einem der Ansprüche 1 und 2,
dadurch gekennzeichnet, daß
die Stange (21) der Einzelrollen-Verstellvorrichtung ein Flachstück (26) aufweist, in das ein Loch (25) eingearbeitet ist, das die Befestigung dieser Verstellvorrichtungsstange (21) am beweglichen Teil des Sitzes, z.B. an der Rückenlehne ermöglicht.
